# EUROPEAN PATENT SPECIFICATION

(11) **EP 0 597 716 B1**
(45) Date of publication and mention of the grant of the patent: **15.07.1998**
(21) Application number: 93309037.5
(22) Date of filing: 11.11.1993
(51) Int. Cl.: E03B 3/28

(54) **Device for collecting drinking water from the atmosphere**
Vorrichtung zur Sammlung von Trinkwasser aus der Atmosphäre
Dispositif pour obtenir de l'eau potable de l'atmosphère

(30) Priority: 12.11.1992 IL 10372992
(43) Date of publication of application: 18.05.1994
(73) Proprietor: DIL SHAM VENTURES, Sark, Channel Islands (GB)
(72) Inventor: Karniel, Ishai, Azorei Chen, Tel-Aviv (IL)
(74) Representative: Gilmour, David Cedric Franklyn

(56) References cited:
- WO-A-92/13623
- FR-A- 2 496 080
- US-A- 3 035 418
- US-A- 4 255 937

## Description

The present invention relates to electric devices for drinking water dispensing, to be installed in the offices, in public places at home, etc.; more particularly, to atmospheric water collectors.

One of the major challenges facing the world in the 1990's is a reliable source of fresh clean drinking water. It is widely known in the U.S.A., for example, that 20% of all municipal water systems have detectable levels of contaminants, and a study by Cornell University found that more than 63% of rural household water supplies were considered unsafe. Canadian magazines and newspapers also note that many Canadians do not believe assurances that their local tap water is safe to drink. Analysis revealed several chemicals in Toronto water, some of which are potentially harmful. (Maclean's/January 15, 1990).

More and more, consumers are turning to bottled water for their drinking needs.

However, using bottled water for stationary coolers, consumers have to lift heavy bottles, store them, return them and take care of monthly bills. And with the average price of bottled water around $5.00 for a 5 gallon bottle, an office or family household can easily spend $50 to $100 a month for their drinking and cooking needs.
Moreover,"... pricey bottled waters are not necessarily safer or purer than plain tap water", the General Accounting Office (U.S.A.) said in one of the reports. (U.S.A. today, 04/11/91).
According to the Northeastern University (Boston) study, the office cooler may be pouring out enough bacteria to make people ill. After testing reservoir tanks and faucets in 10 campus coolers over two months, it was said, that the lower number of bacteria were in bottles before they were put in the dispenser. Bacteria multiplied rapidly in reservoirs and faucets. (U.S.A. today, 05/28/92).

Several alternative designs of water coolers were found in the prior art, describing portable devices for collecting and providing drinking water from the atmosphere, thus avoiding the above-mentioned problems of bottled water supply and use. /U.S. patents Nos. 1,931,347; 2,409,624; and 3,675,442 can be mentioned in this connection./

U.S. patent No. 4,255,937 describes an electric apparatus contained in a portable cabinet. A dehuimidifier is located in an upper compartment separated by a horizontal partition from a lower compartment. In the upper compartment, two opposite walls are perforated to provide access of new moisture carrying air to circulate about the dehumidifier compartment. A water feed conduit from the dehumidifier leads to a water collecting tank in the lower compartment, passing through a water filter on its way. An ultra-violet light bulb sterilizes the water in the tank. A water level control in the collecting tank controls the operation of the dehumidifier. A water pump controlled by a combination water discharge spout and pump switch pumps the water to the spout, up through a checkvalve and another water filter. A complete electric refrigerator is also included with the cabinet for keeping the water cool and drinkable.

However, the described device has several drawbacks, namely: its dehumidifier system does not produce sufficient quantities of water; its sterilization system is not reliable enough; the device is noisy, consumes considerable electric power and does not provide the necessary heat dissipation, thus lowering the efficiency of the system.

More particularly, tests have revealed that the ultra violet light can only purify up to 1/2 inch below the depth of the water line in the tank.
Bacterial growth and build up can accumulate in trays and tubing of the device, for instance, in the feeder connecting the dehumidification unit and the holding tank. Moreover, this feeder becomes clogged with sediment or other hard materials, which are not purified in the process of the unit, thus the water filter placed prior to disposition of the water from the tank, is useless.
Besides that, the described device design does not encounter the machine's pressure variations and temperature fluctuations, thus the functioning of the machine is critical to these fluctuations, especially to the temperatures below 10°C degrees.
The cabinet of the machine suffers from contamination by the unfiltered air, thereby increasing the frequency of undesired failures and servicing.

WO 92/13623 describes a portable air-water generator for obtaining potable water from ambient air having an air filter, a compressor, a fan, a condenser coil, an evaporator coil, and two water holding reservoirs, one of them being an intermediary reservoir intended for collecting water from the coil via a pan and a tube. The intermediary reservoir is provided with an internal UV light. The water from the intermediary reservoir is pumped through a water filter and an additional UV light to a water storage unit.

The described device has a long water passage line comprising excessive tubes, and an intermediary reservoir, which provides conditions for developing bacteria. the intermediary reservoir is equipped with the ineffective internal UV light. Moreover, it does not provide chilling of the obtained water, i.e. cannot serve as a self contained unit producing potable water ready to use.

It is therefore the purpose of the present invention to provide an atmospheric water collector, having a reliable sterilizing system, increased efficiency, and characterized by producing sufficient quantities of drinking water ready to use, and thus being an improved and more efficient version of the ones described in the prior art.

The most significant problem for producing water is temperatures below 10°C. The machine can be provided with a conventional regulator comprising a capillary tube of a thermostat, and a defrost sensor. In this case the machine may condense and convert the water into ice, until the defrost sensor activates shutting down the refrigerant compressor and thus stopping the condensation activity of the cold coil . Then the machine merely continues to pull air across the coils and ice, until melting of the ice is achieved.
In order to improve the quantity of the final water production, the prior filtration of air is suggested by the applicant, as will be described later. However, air which has been deionized or negatively statically charged by filtration through the purification filter, has an influence on the static pressure and other variables, which are not encountered in constructions described in the cited patent references. These variations in pressure influence the machine production.
In order to improve the crude regulation of the refrigerant effected by the mentioned capillary tube, specific means are needed, which would have the ability of assisting the capillary tube to regulate the pressure of the refrigerant liquids contained in the compressors and in the lines.

It is therefore the additional purpose of the present invention to provide a device workable in wide temperature and humidity scopes; namely, to provide a device able to compensate temperature and humidity conditions fluctuating more than 50%, and therefore able to condense water at temperatures lower than 10°C.

A device for collecting drinking water from the atmosphere is based on the prior filtration of the air, dehumidification of the air and the subsequent purification of the obtained water supply, and comprises a self contained unit to be connected to a source of electricity and including an air purification filter, a refrigeration compressor, a fan, a condenser coil, an evaporator coil, a water holding reservoir, a water dispensing line, first and second water purification apparatuses mounted before and after said water holding reservoir respectively; and pumping means placed outside said water holding reservoir for pumping water therefrom; characterized in that said first purification apparatus is a water filter, connected directly between said condenser coil and said water holding reservoir, and said second purification apparatus is a UV water purifier placed in said water dispensing line at its discharge port; said self contained unit being additionally provided with a second refrigeration compressor for cooling the water in the water holding reservoir.

In a preferred embodiment said air purification filter is a system of various filtration screens.

In a further preferred embodiment said water filter connecting said condenser coils and said water holding reservoir is a ceramic filter.

In a further preferred embodiment said refrigeration fan is the blower type fan.

In a further preferred embodiment said two refrigeration compressors are high power and a low power refrigeration compressors.

In a further preferred embodiment said low power compressor is placed in an upper compartment of said self contained unit; said high power compressor is placed in a lower compartment of said self contained unit; and said fan is placed in said lower compartment of said self contained unit.

In an alternative further preferred embodiment said low power compressor is placed in a lower compartment of said self contained unit; and said high power compressor is placed in a lower compartment of said self contained unit; and said fan is placed in the mid range of said self contained unit.

In a further embodiment said condenser coil is placed in parallel with said evaporator coil and is provided with a metal framing, mounted between said evaporator coil and said fan in order to channel air flow and secure said condenser coil.

In a further alternative embodiment said fan is a coaxial fan.

In a further preferred embodiment a capillary tube and a defrost sensor are used as a regulator of a refrigerant in said device.

In a further preferred embodiment in order to regulate the pressure of the refrigerant liquids contained in said compressors, according to fluctuations in temperature and humidity, an expansion valve is provided; and said expansion valve is controlled by a computer board.

The expansion valve compensates conditions which fluctuate more than 50% in humidity and temperature. For instance, at low temperatures the expansion valve cuts down on the accumulation of ice by adapting the machine's pressure variations to continue to condense water as opposed to ice.

In a further preferred embodiment said self containing unit is provided with double band condenser coils in order to allow for greater variations in temperature without the loss of water production.

In a further embodiment said self containing unit is provided with an integrated component board for monitoring various machine operations and regulating the fluid and temperature levels throughout said device.

In a further preferred embodiment said air purification filter is a multilayer filter known as EcoFlo ^{R} air conditioning and heating filter.

In a further embodiment a re-circulation pump is provided for continuous circulation of the water inside said refrigeration box and inside said water holding reservoir through additional filtration systems.

The device described above has the following advantages.
1.The water which is condensed on the coils is 75-100% cleaner than the unfiltered air.
2. The air filter keeps the self containing unit of the machine cleaner, thereby cutting down on servicing and mechanical failure.
3.The air filtration prevents the congregation of disease forming bacteria and other particles inside the dehumidification unit resulting in the prevention of many water/airborne disease contaminants which may affect the water supply.
4. The machine is more reliable and effective at low temperatures due to the novel control system comprising a computer board and an expansion valve, able to regulate the pressure of the refrigerants in the compressors.
5. The water is disinfected at the discharge point due to the placing of the ultra-violet filter directly into the outlet water line ( instead of the water holding tank) , thereby assuring sterilization of the water prior to dispensing.
6. The machine does not use an inlet water line connecting between the dehumidification unit and the holding tank. It allows the machine to collect a greater quantity of water directly off the coils without the need of collecting it in plastic or stainless steel trays or tubing, being also suitable areas for bacterial growth. Instead of the unnecessary tubing, a water filter is introduced, effecting a prior water purification.
7. The positioning of one or both compressors in the lower portion of the device and cooling those compressors with ventilation from the lower fans located in the lower or in the mid range of the device prevent the device from being too top heavy. The machine is able to tip over at a 15 degree angle.
8. The specific contents and configuration of the device provide sufficient heat dissipation and lowers the noise.

The present invention can be best understood and illustrated by the aid of the attached drawings.

Fig.1 illustrates a three-dimensional view of the suggested device for collecting drinking water from the atmosphere.

Fig.2 illustrates a top view of the device illustrated in Fig.1.

Fig.3 illustrates a partial crossection of the device illustrated in Fig.1, in an open position.

Fig.4 illustrates a side view of the device illustrated in Fig.1 with a partial crossection.

Fig.5 illustrates the crossection of the device as illustrated in Fig.3, in the closed working position.

Fig.6 illustrates a frontal crossection view of the device illustrated in Fig.1.

Figs.7,8 illustrate a crossection of another modification of the suggested device for collecting drinking water from the atmosphere.

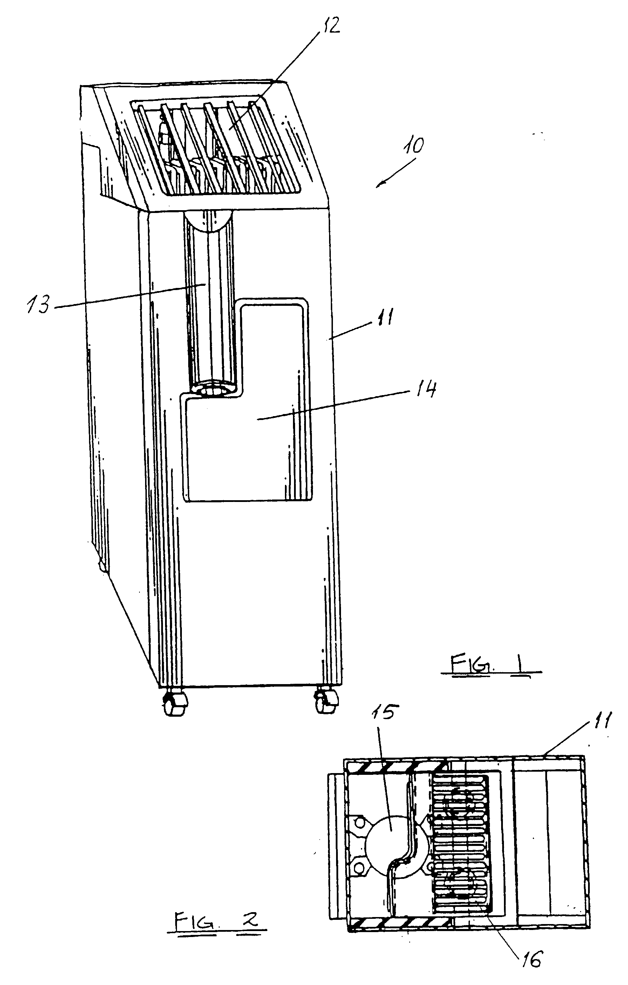

Fig.1 illustrates a three-dimensional view of a suggested device 10 for collecting drinking water from the atmosphere. In Fig.1 one can see a self contained unit 11, an orifice for an air filter 12, a cup dispenser 13 and a water discharge compartment 14.

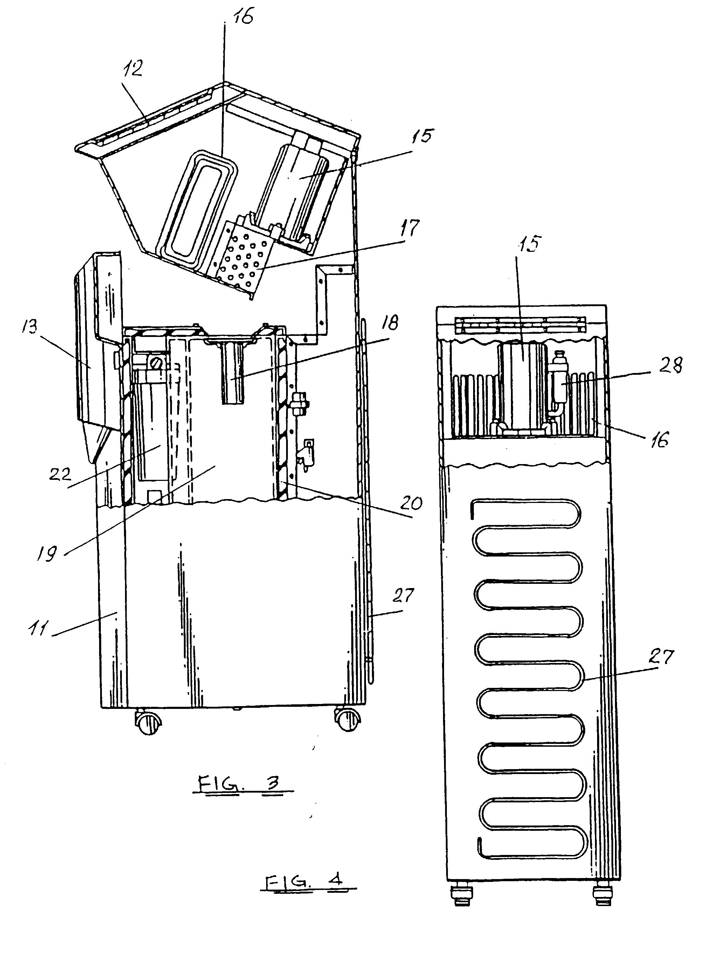

Fig.2 illustrates a top view of the device 10, showing a low power compressor 15. It is positioned in the upper part of the self contained unit 11. An evaporator coil 16 is positioned near the compressor 15.

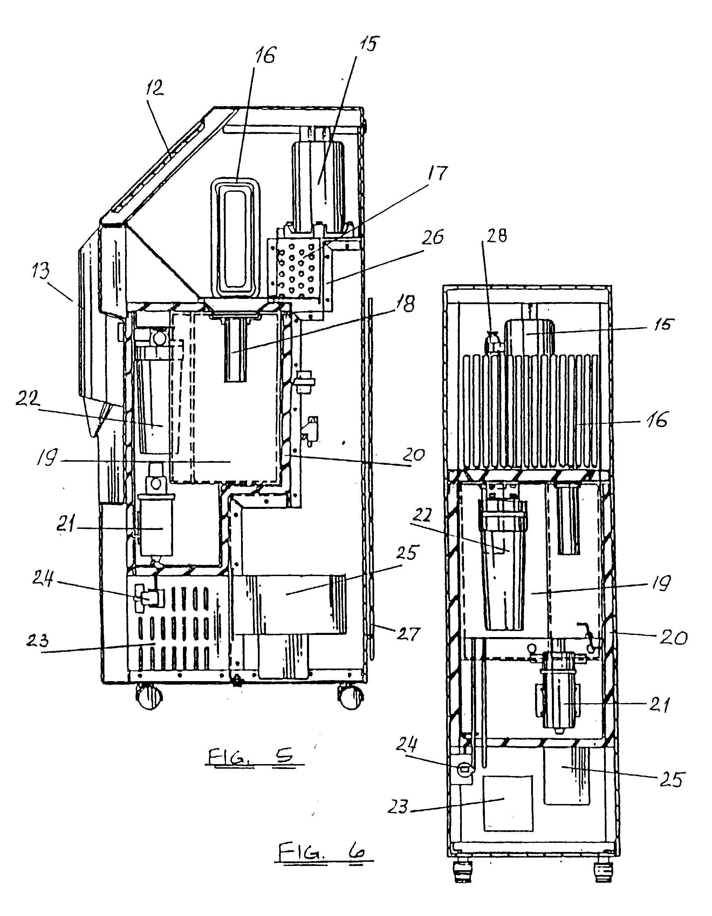

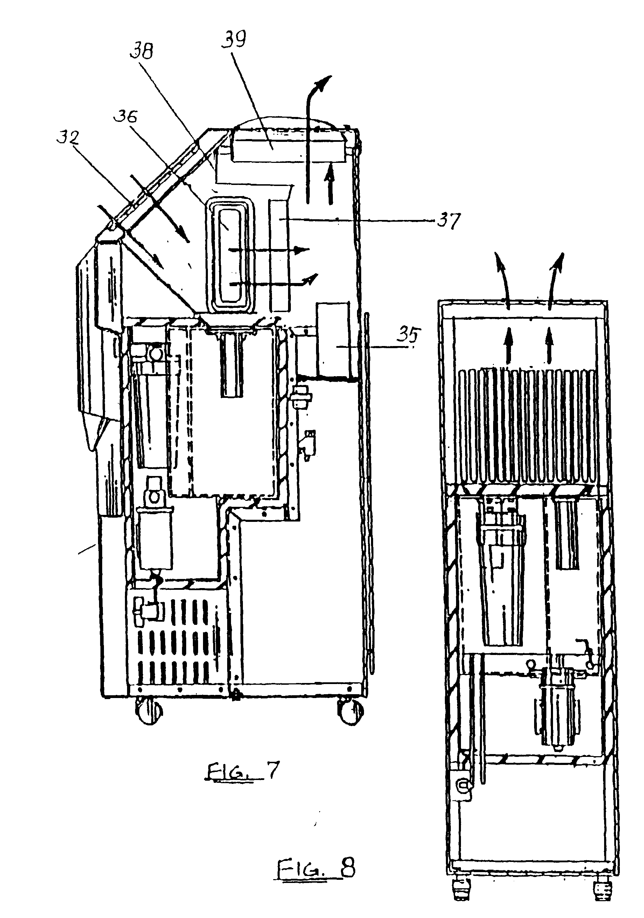

Fig.3, 4, 5 and 6 illustratrate the structure of the first embodiment of the suggested device.

The evaporator coil 16, the low power compressor 15 ( such as 1/2 horse power compressor) and a condenser coil 17 are placed in the upper part of the self contained unit 11. The cold box 20 is situated in the lower compartment of the unit 11. The cold box 20 contains a water reservoir 19, collecting water from a ceramic filter 18 placed under the condenser coil 17. The cold box 20 comprises also a pump 21 and an ultra-violet carbon filter 22, both are attached in turn to a water line ( not shown) coming out of the water collecting reservoir 19. A high power compressor 23 ( such as 120 HP power chiller compressor) is placed under the cold box 20, provided with a cold box thermostat 24 and a blower type fan 25. The upper compartment and the lower compartment of the unit 11 are connected by means of an air passage 26.

The moist air, coming through the multilayered air purification filter 12, passes through the evaporator coil 16, and water vapours condense onto the condenser coil 17 of the low power compressor 15. The air goes through the coil 17 and passes down into the lower compartment through the orifice 26. In the lower compartment of the unit 11 the air is propelled by the blower fan 25 into the high power chiller compressor 23, and then released outside. Thus the dehumidification and the cooling of the water are provided in parallel in the same device.

The back side of the unit 11 is provided with a static coil 27, to allow the air cooling of the coil.

The condenser coil 17 is a double band, and the compressor 15 is provided with an expansion valve 28. The expansion valve 28 is connected to the computer board (not shown). The expansion valve in combination with the computer allow greater variations in temperature without loss of water production.

Fig.7 and Fig.8 demonstrate an alternative modification of the suggested device. This modification involves another placement of the elements inside the unit, and comprises one additional partition and a modified fan. The air flow chart in this modified system is different.

The low power compressor 35 is placed on the top of the lower compartment of the unit 31.

Opposite, a fan (for instance, a coaxial fan) 39 is placed at the top of the upper compartment of the unit.

The condenser coil 37 is situated along side the evaporator 36. A metal framing 38 is provided between the evaporator 36 and the fan 39 in order to channel air flow and secure the condenser coil 37.

## Claims

1. A device for collecting drinking water from the atmosphere, based on the prior filtration of the air, dehumidification of the air and the subsequent purification of the obtained water supply, said device comprising a self contained unit (11) to be connected to a source of electricity and including an air purification filter (12), a refrigeration compressor (15, 35), a fan (25, 39), a condenser coil (17, 37), an evaporator coil (16, 36), a water holding reservoir (19), a water dispensing line, first (18) and second (22) water purification apparatuses mounted before and after said water holding reservoir (19) respectively, and pumping means (21) placed outside said water holding reservoir (19) for pumping the water therefrom;
said device being characterized in that said first purification apparatus (18) is a water filter connected directly between said condenser coil (17) and said water holding reservoir (19), and said second purification apparatus (22) is a UV water purifier placed in said water dispensing line at its discharge port; said self contained unit (11) being additionally provided with a second refrigeration compressor (23) for cooling the water in the water holding reservoir (19).

2. The device for collecting drinking water from the atmosphere, as in Claim 1, wherein said air purification filter (12) is a system of various filtration screens.

3. The device for collecting drinking water from the atmosphere, as in Claim 1, wherein said water filter (18) is a ceramic filter.

4. The device for collecting drinking water from the atmosphere, as in Claim 1, wherein one of said two refrigeration compressors is a high power refrigeration compressor (23) placed in a lower compartment of said self contained unit, and another one is a low power refrigeration compressor (15, 35).

5. The device for collecting drinking water from the atmosphere, as in Claim 4, wherein said low power compressor (15) is placed in an upper compartment of said self contained unit (11); and said fan (25) is placed in said lower compartment of said self contained unit (11).

6. The device for collecting drinking water from the atmosphere, as in Claim 4, wherein said low power compressor (35) is placed in the mid range of said self contained unit; and said fan (39) is placed in the upper compartment thereof.

7. The device for collecting drinking water from the atmosphere, as in Claim 4, wherein said low power compressor (15,35) is placed in a lower compartment of said self contained unit; and said fan (25,39) is placed in the mid range of said self contained unit.

8. The device for collecting drinking water from the atmosphere, as in Claim 1, wherein said fan (15) is the blower type fan.

9. The device for collecting drinking water from the atmosphere, as in Claim 1, wherein said condenser coil (16,36) is placed in parallel with said evaporator coil (17,37) and is provided with a metal framing, mounted between said evaporator coil and said fan (39) in order to channel air flow and secure said condenser coil; said fan being a coaxial fan.

10. The device for collecting drinking water from the atmosphere, as in Claim 1, wherein a capillary tube and a defrost sensor are used as a regulator of a refrigerant in said device.

11. The device for collecting drinking water from the atmosphere, as in Claim 1, wherein in order to regulate the pressure of the refrigerant liquids contained in said at least one compressor according to fluctuations in temperature and humidity, an expansion valve (28) is provided; said expansion valve being controlled by a computer.

12. The device for collecting drinking water from the atmosphere, as in Claim 1, wherein said self contained unit (11) is provided with double condenser coils (16) in order to allow for greater variations in temperature without the loss of water production.

13. The device for collecting drinking water from the atmosphere, as in Claim 1, wherein said self contained unit (11) is provided with a control board for monitoring various machine operations and regulating the fluid and temperature levels throughout said device.

14. The device for collecting drinking water from the atmosphere, as in Claim 1, wherein a re-circulation pump is provided for continuous circulation of the water inside said water holding reservoir (19) through additional filtration systems.

## Patentansprüche

1. Eine Vorrichtung zur Sammlung von Trinkwasser aus der Atmosphäre auf der Grundlage des vorhergehenden Filterns der Luft, einer Entfeuchtung der Luft und einer nachfolgenden Reinigung des erhaltenen Wasservorrats, wobei die genannte Vorrichtung eine unabhängige Einheit (11) umfaßt, die mit einer Stromquelle zu verbinden ist und ein Luftreinigungsfilter (12), einen Kälteverdichter (15, 35), ein Gebläse (25, 39), eine Kühlschlange (17, 37), eine Verdampfschlange (16, 36), einen Wasseraufbewahrungsbehälter (19), eine Wasserabgabeleitung, eine erste (18) und eine zweite (22) Wasserreinigungsvorrichtung, die vor bzw. nach dem genannten Wasseraufbewahrungsbehälter (19) angebracht ist, und eine Pumpvorrichtung (21) umfaßt, die außerhalb des genannten Wasseraufbewahrungsbehälters (19) zum Pumpen von Wasser aus ihm angeordnet ist;
die genannte Vorrichtung ist **dadurch gekennzeichnet,** daß die erste Reinigungsvorrichtung (18) ein Wasserfilter ist, das unmittelbar zwischen der genannten Kühlschlange (17) und dem genannten Wasseraufbewahrungsbehälter (19) verbunden ist, und die genannte zweite Reinigungsvorrichtung (22) ein UV Wasserreiniger ist, der in der genannten Wasserabgabeleitung an ihrer Austragsöffnung angeordnet ist; die genannte unabhängige Einheit (11) zusätzlich mit einem zweiten Kälteverdichter (23) zur Kühlung des Wasser in dem Wasseraufbewahrungsbehälter (19) versehen ist.

2. Die Vorrichtung zur Sammlung von Trinkwasser aus der Atmosphäre, wie in Anspruch 1, wobei das genannte Luftreinigungsfilter (12) ein System verschiedener Filtersiebe ist.

3. Die Vorrichtung zur Sammlung von Trinkwasser aus der Atmosphäre, wie in Anspruch 1, wobei das genannte Wasserfilter (18) ein keramisches Filter ist.

4. Die Vorrichtung zur Sammlung von Trinkwasser aus der Atmosphäre, wie in Anspruch 1, wobei einer der genannten zwei Kälteverdichter ein Hochleistungskälteverdichter (23) ist, der in einem unteren Abteil der genannten unabhängigen Einheit angeordnet ist, und der andere ein Niederleistungskälteverdichter (14, 35) ist.

5. Die Vorrichtung zur Sammlung von Trinkwasser aus der Atmosphäre, wie in Anspruch 4, wobei der genannte Niederleistungsverdichter (15) in einem oberen Abteil der genannten unabhängigen Einheit (11) angeordnet ist, und das genannte Gebläse (25) in dem genannten unteren Abteil der genannten unabhängigen Einheit (11) angeordnet ist.

6. Die Vorrichtung zur Sammlung von Trinkwasser aus der Atmosphäre, nach Anspruch 4, wobei der genannte Niedereleistungsverdichter (35) in dem mittleren Bereich der genannten unabhängigen Einheit angeordnet ist, und das genannte Gebläse (39) in deren oberen Abteil angeordnet ist.

7. Die Vorrichtung zur Sammlung von Trinkwasser aus der Atmosphäre, wie in Anspruch 4, wobei der genannte Niederleistungsverdichter (15, 35) in einem unteren Abteil der genannten unabhängigen Einheit angeordnet ist, und das genannte Gebläse (25, 39) in dem mittleren Bereich der genannten unabhängigen Einheit angeordnet ist.

8. Die Vorrichtung zur Sammlung von Trinkwasser aus der Atmosphäre, wie in Anspruch 1, wobei das genannte Gebläse (15) ein Gebläseventilator ist.

9. Die Vorrichtung zur Sammlung von Trinkwasser aus der Atmosphäre, wie in Anspruch 1, wobei die genannte Kühlschlange (16, 36) parallel zu der genannten Verdampfungsspule (17, 37) angeordnet und mit einer Metallumrahmung versehen ist, die zwischen der genannten Verdampferschlange und dem genannten Gebläse (39) angebracht ist, um die Luftströmung zu lenken und die genannte Kühlschlange zu befestigen, wobei der genannte Ventilator ein koaxialer Ventilator ist.

10. Die Vorrichtung zur Sammlung von Trinkwasser aus der Atmosphäre, wie in Anspruch 1, wobei ein Kapillarrohr und ein Enteisungssensor als ein Regler eines Kältemittels in der genannten Vorrichtung verwendet werden.

11. Die Vorrichtung zur Sammlung von Trinkwasser aus der Atmosphäre, wie in Anspruch 1, wobei, um den Druck der Kältemittelflüssigkeiten, die in dem genannten wenigstens einen Verdichter enthalten sind, nach Maßgabe von Schwankungen der Temperatur und Feuchtigkeit zu regeln, ein Ausdehnungsventil (28) vorgesehen ist, wobei das genannte Ausdehnungsventil durch einen Computer gesteuert wird.

12. Die Vorrichtung zur Sammlung von Trinkwasser aus der Atmosphäre, wie in Anspruch 1, wobei die genannte unabhängige Einheit (11) mit doppelten Kühlschlangen (16) versehen ist, um größere Temperaturänderungen ohne Verlust an Wassererzeugung zu ermöglichen.

13. Die Vorrichtung zur Sammlung von Trinkwasser aus der Atmosphäre, wie in Anspruch 1, wobei die genannte unabhängige Einheit (11) mit einer Kontrolltafel zur Überwachung verschiedener Maschinenvorgänge und zum Regeln der Fluid- und Temperaturwerte in der gesamten genannten Vorrichtung vorgesehen ist.

14. Die Vorrichtung zur Sammlung von Trinkwasser aus der Atmosphäre, wie in Anspruch 1, wobei eine Umlaufpumpe zum fortlaufenden Umlauf des Wassers innerhalb des genannten Wasseraufbewahrungsbehälters (19) durch zusätzliche Filtersysteme hindurch vorgesehen ist.

## Revendications

1. Dispositif pour collecter de l'eau potable prise sur l'atmosphère, basé sur la filtration préalable de l'air, la déshumidification de l'air et la purification ultérieure de la réserve d'eau obtenue, ledit dispositif comprenant une unité autonome (11) à connecter à une source d'électricité et comprenant un filtre de purification de l'air (12), un compresseur de réfrigération (15, 35), un ventilateur (25, 39), un serpentin de condenseur (17, 37), un serpentin d'évaporateur (16, 36), un réservoir de retenue d'eau (19), une conduite de distribution de l'eau, un premier (18) et un deuxième (22) dispositifs de purification de l'eau montés respectivement en amont et en aval dudit réservoir de retenue d'eau (19), et des moyens de pompage (21) placés à l'extérieur dudit réservoir de retenue d'eau (19) pour pomper l'eau de ce dernier :
ledit dispositif étant caractérisé en ce que ledit premier dispositif de purification (18) est un filtre à eau intercalé directement entre ledit serpentin de condenseur (17) et ledit réservoir de retenue d'eau (19), et ledit deuxième dispositif de purification (22) est un purificateur d'eau a UV placé dans ladite conduite de distribution d'eau au droit de son orifice de sortie ; ladite unité autonome (11) étant munie en supplément d'un deuxième compresseur de réfrigération (23) destiné à refroidir l'eau contenue dans le réservoir de retenue d'eau (19).

2. Dispositif pour collecter de l'eau potable prise sur l'atmosphère selon la revendication 1, dans lequel ledit filtre de purification de l'air (12) est un système comprenant différents tamis de filtration.

3. Dispositif pour collecter de l'eau potable prise sur l'atmosphère selon la revendication 1, dans lequel ledit filtre a eau (18) est un filtre céramique.

4. Dispositif pour collecter de l'eau potable prise sur l'atmosphère selon la revendication 1, dans lequel l'un desdits deux compresseurs de réfrigération est un compresseur de réfrigération de haute puissance (23) placé dans un compartiment inférieur de ladite unité autonome, et l'autre est un compresseur de réfrigération de basse puissance (15, 35).

5. Dispositif pour collecter de l'eau potable prise sur l'atmosphère selon la revendication 4, dans lequel ledit compresseur de basse puissance (15) est placé dans un compartiment supérieur de ladite unité autonome (11) ; et ledit ventilateur (25) est placé dans ledit compartiment inférieur de ladite unité autonome (11).

6. Dispositif pour collecter de l'eau potable prise sur l'atmosphère selon la revendication 4, dans lequel ledit compresseur de basse puissance (35) est placé dans la zone centrale de ladite unité autonome ; et ledit ventilateur (39) est placé dans son compartiment supérieur.

7. Dispositif pour collecter de l'eau potable prise sur l'atmosphère selon la revendication 4, dans lequel ledit compresseur de basse puissance (15, 35) est placé dans un compartiment inférieur de ladite unité autonome ; et ledit ventilateur (25, 39) est placé dans la zone centrale de ladite unité autonome.

8. Dispositif pour collecter de l'eau potable prise sur l'atmosphère selon la revendication 1, dans lequel ledit ventilateur (15) est un ventilateur du type soufflant.

9. Dispositif pour collecter de l'eau potable prise sur l'atmosphère selon la revendication 1, dans lequel ledit serpentin de condenseur (16, 36) est placé en parallèle avec ledit serpentin d'évaporateur (17, 37) et est muni d'un carénage métallique, monté entre ledit serpentin d'évaporateur et ledit ventilateur (39) pour canaliser l'écoulement d'air et fixer ledit serpentin de condenseur ; ledit ventilateur étant un ventilateur coaxial.

10. Dispositif pour collecter de l'eau potable prise sur l'atmosphère selon la revendication 1, dans lequel un tube capillaire et un capteur de dégivrage sont utilisés comme régulateur d'un réfrigérant contenu dans ledit dispositif.

11. Dispositif pour collecter de l'eau potable prise sur l'atmosphère selon la revendication 1, dans lequel il est prévu un détendeur (28) pour régler la pression des liquides réfrigérants contenus dans ledit au moins un compresseur en fonction des fluctuations de température et d'humidité ; ledit détendeur étant commandé par un ordinateur.

12. Dispositif pour collecter de l'eau potable prise sur l'atmosphère selon la revendication 1, dans lequel ladite unité autonome (11) est munie de doubles serpentins de condenseur (16) pour admettre de plus grandes variations de la température sans perte de production d'eau.

13. Dispositif pour collecter de l'eau potable prise sur l'atmosphère selon la revendication 1, dans lequel ladite unité autonome (11) est munie d'un tableau de commande servant à surveiller diverses opérations de la machine et à régler les niveaux de fluide et de température dans toute l'étendue dudit dispositif.

14. Dispositif pour collecter de l'eau potable prise sur l'atmosphère selon la revendication 1, dans lequel une pompe de recirculation est prévue pour faire circuler continuellement l'eau contenue à l'intérieur dudit réservoir de retenue d'eau (19) à travers des systèmes de filtration additionnels.
